# EUROPÄISCHE PATENTANMELDUNG

(11) **EP 4 764 599 A1**
(43) Veröffentlichungstag der Anmeldung: **24.06.2026**
(21) Anmeldenummer: 24221181.1
(22) Anmeldetag: 18.12.2024
(51) Int. Cl.: G01S 7/481, G01S 17/42, G01S 17/89, G01S 17/34

(54) **DISTANZMESSVORRICHTUNG**

(71) Anmelder: SICK AG, 79183 Waldkirch (DE)
(72) Erfinder: Menzel, Christoph, 79211 Denzlingen (DE); Böckling, Frederick, 79108 Freiburg (DE)
(74) Vertreter: Manitz Finsterwald Patent- und Rechtsanwaltspartnerschaft mbB

(57) **Zusammenfassung**

Die Erfindung betrifft eine Distanzmessvorrichtung (10), umfassend: eine statische Lichterzeugungs- und -erfassungseinheit (12), welche ausgebildet ist, zumindest ein optisches Signal als Sendesignal (14) zu erzeugen und zumindest ein optisches Signal als Empfangssignal (15) zu erfassen; und eine bewegliche Lichtsende- und -empfangseinheit (16), welche ausgebildet ist, das Sendesignal (14) in einen Messbereich (18) zu entsenden und ein von Objekten in dem Messbereich (18) zurückgestrahltes optisches Signal als Empfangssignal (15) zu empfangen. Die Distanzmessvorrichtung (10) ist ferner ausgebildet, in einem Signal-übertragungsabschnitt (22) zwischen der statischen Lichterzeugungs- und -erfassungseinheit (12) und der beweglichen Lichtsende- und -empfangseinheit (16) das Sendesignal (14) und/oder Empfangssignal (15) zumindest teilweise über eine Freiraum-Übertragung zu übertragen.

## Beschreibung

Die Erfindung betrifft eine Distanzmessvorrichtung sowie ein Verfahren zur Messung einer Distanz.

Der Einsatz von Sensortechnik zur Erfassung der Umgebung ist in vielen technischen Bereichen an der Tagesordnung. Beispielsweise werden Sensoren wie Lidar-Sensoren, Radar-Sensoren oder Ultraschallsensoren in der Automobilbranche eingesetzt, um die Umgebung in Echtzeit zu erfassen und basierend auf den erfassten Daten Fahrerassistenzfunktionen oder Funktionen für das autonome Fahren bereitzustellen. In vielen Anwendungen werden derartige Sensoren mit Rundumsicht, d.h. mit einem 360°-Erfassungsbereich, eingesetzt, um ein vollständiges Bild der Umgebung zu erfassen. Derartige Systeme umfassen in der Regel eine sich drehende Sende- und Empfangseinheit, welche in der Lage ist, sich um 360° zu drehen und während der Drehbewegung die Umgebung, d.h. die Distanz zu Objekten innerhalb der Umgebung, zu erfassen.

Dabei befinden sich in der Regel die Lichterzeugungs- und -erfassungseinheit, aber auch die Bauteile zur Messdatenerfassung und -verarbeitung im rotierenden Teil der Vorrichtung. Die aufgrund der Bauteile erzeugte Wärme in dem rotierenden Teil kann somit mangels thermischer Kopplung an das Gehäuse nicht schnell genug abtransportiert werden, was sich negativ auf die Energieeffizienz und Performanz der Messvorrichtung auswirkt. Insbesondere bei Messverfahren, bei denen große Datenmengen produziert werden, führt dies zu einer verschlechterten Energieeffizienz. Darüber hinaus ist der rotierende Teil der Messvorrichtung aufgrund der Vielzahl von untergebrachten Bauteilen träge.

Es ist somit eine Aufgabe der Erfindung, eine Distanzmessvorrichtung mit einer erhöhten Effizienz bereitzustellen.

Diese Aufgabe wird durch die Distanzmessvorrichtung gemäß Anspruch 1 gelöst.

Ein erster Aspekt der Erfindung bezieht sich auf eine Distanzmessvorrichtung, insbesondere eine FMCW-Distanzmessvorrichtung, umfassend:
eine statische Lichterzeugungs- und -erfassungseinheit, welche ausgebildet ist,
zumindest ein optisches Signal als Sendesignal zu erzeugen und zumindest ein optisches Signal als Empfangssignal zu erfassen; und
eine bewegliche Lichtsende- und -empfangseinheit, welche, insbesondere relativ zu der statischen Lichterzeugungs- und -erfassungseinheit, beweglich ist, und ausgebildet ist, das Sendesignal in einen Messbereich zu entsenden und ein von Objekten in dem Messbereich zurückgestrahltes optisches Signal als Empfangssignal zu empfangen;
wobei die Distanzmessvorrichtung ausgebildet ist, in einem Signalübertragungsabschnitt zwischen der statischen Lichterzeugungs- und -erfassungseinheit und der beweglichen Lichtsende- und -empfangseinheit das Sendesignal und/oder das Empfangssignal zumindest teilweise über eine Freiraum-Übertragung zu übertragen.

Mit anderen Worten erfolgt die Übertragung eines optischen Signals zumindest innerhalb des Signalübertragungsabschnitts, ohne die Verwendung eines Lichtleiters, wie beispielsweise einer optischen Faser oder eines Wellenleiters, d.h. nur per Freiraum-Übertragung. In dem Signalübertragungsabschnitt wird das optische Signal somit durch den Raum selbst geführt, ohne die Verwendung eines dedizierten Bauteils als physischer Leiter. Die jeweiligen zu übertragenden optischen Signale werden hierfür beispielsweise mittels einer entsprechenden Optik an einem ersten Ende des Signalübertragungsabschnitts fokussiert in eine vorgegebene Richtung gelenkt, so dass sie an einem zweiten Ende des Signalübertragungsabschnitts von einer entsprechenden Optik empfangen und weitergeleitet werden können. Insbesondere werden die optischen Signale über den Signalübertragungsabschnitt bidirektional, d.h. von der Lichterzeugungs- und -erfassungseinheit (Lichterzeugungseinheit und Lichterfassungseinheit) zur Lichtsende- und -empfangseinheit (Lichtsendeeinheit und Lichtempfangseinheit) oder umgekehrt, übertragen. Der Signalübertragungsabschnitt erstreckt sich beispielsweise von einem Gehäuse der Lichterzeugungs- und -erfassungseinheit zu einem Gehäuse der Lichtsende- und -empfangseinheit, insbesondere von einem Lichtempfangs- und - sendeelement, z.B. einer Linse, der Lichterzeugungs- und -erfassungseinheit zu einem Lichtempfangs- und -sendeelement der Lichtsende- und -empfangseinheit.

Vorteilhafterweise führt der Verzicht auf entsprechende Leitungskomponenten zu einer kostengünstigen und kompakten Anordnung. Insbesondere werden Verschleißerscheinungen, die beispielsweise auf die Bewegung der beweglichen Lichtsende- und -empfangseinheit zurückzuführen sind, und dadurch entstehende Übertragungsfehler, reduziert. Ein weiterer Vorteil der Erfindung liegt darin, dass die Wärme erzeugenden Komponenten der Distanzmessvorrichtung, die für das Erzeugen, Erfassen und Bearbeiten des optischen Signals verantwortlich sind, in dem statischen Teil der Distanzmessvorrichtung integriert sein können, so dass eine verbesserte Wärmeabfuhr möglich ist. Der bewegliche Teil der Distanzmessvorrichtung, d.h. die Lichtsende- und -empfangseinheit, hingegen ist, insbesondere nur, für die Weiterleitung von optischen Signalen ausgebildet, wobei die Lichtsende- und -empfangseinheit insbesondere keine elektrischen Signalverarbeitungskomponenten umfasst. Insgesamt wird mit der erfindungsgemäßen Distanzmessvorrichtung somit eine verbesserte Wärmeabfuhr und damit eine verbesserte Energieeffizienz erzielt.

Die statische Lichterzeugungs- und -erfassungseinheit ist insbesondere an einer vorgegebenen Position der Distanzmessvorrichtung unbeweglich befestigt. Die statische Lichterzeugungs- und -erfassungseinheit umfasst insbesondere zumindest eine Lichtquelle zur Erzeugung des optischen Sendesignals, wobei das optische Sendesignal beispielsweise über einen Lichtleiter in ein optisches Element eingekoppelt wird, um über den Signalübertragungsabschnitt an die bewegliche Lichtsende- und -empfangseinheit übertragen zu werden. Ferner umfasst die statische Lichterzeugungs- und -erfassungseinheit insbesondere zumindest einen Detektor zur Erfassung des zurückgestrahlten Empfangssignals und zur Umwandlung in ein entsprechendes elektrisches Signal. Ferner kann die statische Lichterzeugungs- und -erfassungseinheit eine Signalverarbeitungseinheit, z.B. einen FPGA oder einen ASIC, umfassen, welche die erzeugten elektrischen Signale bearbeiten und basierend darauf eine Distanz zu einem jeweiligen Objekt unter Verwendung bekannter Distanzmessverfahren wie z.B. TOF-Verfahren (Time-of-Flight), FMCW-Verfahren (Frequency Modulated Continous Wave) oder ähnliche Verfahren ermittelt. Insbesondere sind sämtliche elektrische Signalverarbeitungseinheiten in der statischen Lichterzeugungs- und -erfassungseinheit untergebracht, wobei die Lichtsende- und empfangseinheit vorzugsweise frei von elektrischen Signalverarbeitungseinheiten ist.

Zusätzlich zur statischen Lichterzeugungs- und -erfassungseinheit umfasst die Distanzmessvorrichtung eine bewegliche, insbesondere rotierende, Lichtsende- und -empfangseinheit, welche beispielsweise mit der statischen Lichterzeugungs- und -erfassungseinheit beweglich verbunden ist, wobei die Lichterzeugungs- und -erfassungseinheit insbesondere in der Lage ist, sich um mindestens 90°, 180°, 270° oder vorzugsweise 360° zu drehen. Der Signalübertragungsabschnitt verläuft insbesondere entlang einer Rotationsachse der Lichtsende- und -empfangseinheit. Der Signalübertragungsabschnitt ist vorzugsweise kürzer als 10mm, bevorzugt kürzer als 5mm, besonders bevorzugt kürzer als 1mm.

Weitere Ausführungsformen der Erfindung sind der Beschreibung, den Unteransprüchen und den Zeichnungen zu entnehmen.

Gemäß einer ersten Ausführungsform ist die statische Lichterzeugungs- und -erfassungseinheit ausgebildet, eine Vielzahl von Sendesignalen, insbesondere gleichzeitig, zu erzeugen und eine Vielzahl von Empfangssignalen zu erfassen. Die Distanzmessvorrichtung ist somit insbesondere eine mehrlagige Distanzmessvorrichtung, welche in der Lage ist, mehrere optische Sendesignale zu erzeugen und mehrere entsprechende optische Empfangssignale zu empfangen und zu verarbeiten. Die statische Lichterzeugungs- und -erfassungseinheit umfasst hierfür beispielsweise mehrere Lichtquellen, die jeweilige optische Signale erzeugen und emittieren. Die optischen Sendesignale können anschließend über die Lichtsende- und -empfangseinheit insbesondere in unterschiedliche Richtungen, z.B. radial verteilt, oder in dieselbe Richtung, z.B. parallel verteilt, abgestrahlt werden. Für die Ablenkung der jeweiligen optischen Signale kann beispielsweise ein rotierender Spiegel, beispielsweise ein Polygon-Spiegel, oder mikro-elektromechanische Systeme (MEMS) verwendet werden. Ferner kann die Lichterzeugungs- und -erfassungseinheit den jeweiligen Lichtquellen zugehörige Detektoren umfassen, welche ausgebildet sind, das einem Sendesignal zugehörige Empfangssignal zu erfassen und beispielsweise in ein elektrisches Signal für die weitere Verarbeitung umzusetzen. Ein jeweiliges Paar bestehend aus einer Lichtquelle und einem zugehörigen Detektor kann eine Untereinheit der Lichterzeugungs- und -erfassungseinheit bilden, welche ausgebildet ist, eine eigenständige Distanzmessung durchzuführen.

Eine Untereinheit kann grundsätzlich auch mehrere Detektoren umfassen, beispielsweise um eine kohärente Detektion, insbesondere eine "Balanced Detection" durchzuführen und damit das Signalrauschen zu reduzieren und die Empfindlichkeit des Systems zu erhöhen. Die einzelnen Messungen der Detektoren können anschließend in einer, insbesondere einzigen, Signalverarbeitungseinheit verarbeitet werden.

Die Distanzmessvorrichtung kann ferner ausgebildet sein, insbesondere gleichzeitig, d.h. parallel, 16, 32, 64 oder 128 separate optische Signale zu erzeugen und abzustrahlen. Durch die parallelen Sende- und Empfangskanäle kann ein umfassenderes und detaillierteres Bild der Umgebung erfasst werden, was insbesondere bei Anwendungen wie beispielsweise einer Objekterkennung von Vorteil ist. Es ist also auch möglich, komplexe Umgebungen zu erfassen.

Gemäß einer Ausführungsform ist die Distanzmessvorrichtung ausgebildet, Sendesignale und/oder die Empfangssignale vor einer Übertragung über den Signalübertragungsabschnitt zu bündeln und, insbesondere nur, das gebündelte Sendesignal und/oder das gebündelte Empfangssignal über den Signalübertragungsabschnitt zu übertragen. Im Falle einer mehrlagigen Distanzmessvorrichtung ergeben sich im Vergleich zu herkömmlichen "1-Signal"-Distanzmessvomchtungen, welche nur ein einziges optisches Signal übertragen, deutlich mehr zu verarbeitende Signale. Um den hierfür erforderlichen Bauraum zu optimieren und die Komplexität der Signalübertragung zu reduzieren, können die optischen Signale, welche über den Signalübertragungsabschnitt übertragen werden sollen, vor einer Übertragung gebündelt, d.h. komprimiert, werden.

Insbesondere wird über den Signalübertragungsabschnitt somit nur ein einziges optisches Signal übertragen, wobei das gebündelte optische Signal insbesondere die den einzelnen optischen Signalen inhärenten Informationen im Wesentlichen umfasst. Die den einzelnen optischen Signalen zugrundeliegenden Charakteristiken bzw. Informationen sind in dem gebündelten optischen Signal insbesondere derart umfasst, dass diese aus dem gebündelten optischen Signal durch geeignete Verfahren extrahiert werden können.

Gemäß einer Ausführungsform umfasst der Signalübertragungsabschnitt eine Abschirmeinheit, welche ausgebildet ist, die über den Signalübertragungsabschnitt übertragenen optischen Signale von optischen Störsignalen abzuschirmen. Mit anderen Worten kann die optische Signalübertragung über den Signalübertragungsabschnitt durch einen kanalartigen Raum erfolgen, wobei das optische Signal z.B. durch eine Röhre geführt wird, der das Signal vor äußeren Störungen schützt, wobei insbesondere keine optischen Fasern oder Wellenleiter für die Signalübertragung verwendet werden (und das Signal im Signalübertragungsabschnitt stattdessen z.B. nur in Luft übertragen wird). Die Abschirmeinheit kann neben einer Röhre jede andere geeignete Abschirmung umfassen, welche eine kontrollierte Lichtführung ermöglicht. Die Abschirmeinheit kann beispielsweise Materialien wie Metalle, z.B. Aluminium, Kunststoffe, Keramiken oder dergleichen umfassen. Die Abschirmung kann insbesondere über den gesamten Signalübertragungsabschnitt, d.h. von der Lichterzeugungs- und -erfassungseinheit bis zur Lichtsende- und -empfangseinheit, oder über einen Teil des Signalübertragungsabschnitts erfolgen.

Gemäß einer Ausführungsform sind das zumindest eine Sendesignal oder die Sendesignale frequenzmoduliert, insbesondere wobei sich die optischen Signale in ihrer jeweiligen Wellenlänge oder in dem jeweiligen Wellenlängenband, in welchem die Frequenzmodulation erfolgt, im Wesentlichen unterscheiden. Die Distanzmessvorrichtung kann beispielsweise eine FMCW-Distanzmessvorrichtung, z.B. eine FMCW-Lidar-Distanzmessvorrichtung, sein. Die jeweiligen Sendesignale können dabei zwischen einer jeweiligen Maximalfrequenz und einer jeweiligen Minimalfrequenz, insbesondere rampenförmig, moduliert werden. Die Modulation eines jeweiligen Sendesignals erfolgt somit innerhalb eines jeweiligen vorgegebenen Wellenlängenbandes. Wenn die Wellenlängenbänder der einzelnen Sendesignale stark genug voneinander abweichen, können die Sendesignale und Empfangssignale auch bei einer gebündelten Übertragung in Form des gebündelten optischen Signals anschließend voneinander unterschieden werden und damit aus dem gebündelten optischen Signal extrahiert werden.

Die Wellenlängenbänder der optischen Signale können beispielsweise einen vorgegebenen Wellenlängenmindestabstand zwischen benachbarten Wellenlängenbändern einhalten. Hierdurch ist die Extraktion der optischen Einzelsignale aus dem gebündelten optischen Signal besonders einfach, z.B. durch entsprechende Filter, zu bewerkstelligen. Die Wellenlängenbänder der einzelnen optischen Signale können sich aber auch zumindest teilweise überlappen bzw. überschneiden. In einem solchen Fall können beispielsweise Verfahren und Algorithmen eingesetzt werden, um die einzelnen optischen Signale aus dem gebündelten optischen Signal zu extrahieren. Der Überschneidungsanteil zwischen benachbarten Wellenlängenbändern ist vorzugsweise kleiner als 30%, 20% oder 10% einer jeweiligen Wellenlängenbandbreite. Mit anderen Worten können die optischen Signale basierend auf den zugehörigen Wellenlängenbändern identifiziert werden und insbesondere das gebündelte optische Signal wieder in einzelne Signale aufgeteilt werden. Die jeweiligen Wellenlängenbänder der einzelnen optischen Signale sind insbesondere bekannt.

Gemäß einer Ausführungsform umfasst die statische Lichterzeugungs- und -erfassungseinheit eine erste Signalbündelungs- und -spaltungseinheit und die bewegliche Lichtsende- und -empfangseinheit eine zweite Signalbündelungs- und -spaltungseinheit,
wobei die erste Signalbündelungs- und -spaltungseinheit ausgebildet ist, die optischen Sendesignale zu bündeln und das gebündelte optische Sendesignal in Senderichtung auszugeben und ein über den Signalübertragungsabschnitt übertragenes gebündeltes optisches Empfangssignal zu empfangen und eine Vielzahl von optischen Empfangssignale aus dem gebündelten optischen Empfangssignal zu extrahieren und in Empfangsrichtung auszugeben,
wobei die zweite Signalbündelungs- und -spaltungseinheit ausgebildet ist, die Vielzahl von optischen Empfangssignalen zu bündeln und das gebündelte optische Empfangssignal in Empfangsrichtung auszugeben und ein über den Signalübertragungsabschnitt übertragenes gebündeltes optisches Sendesignal zu empfangen und die Vielzahl von optischen Sendesignalen aus dem gebündelten optischen Sendesignal zu extrahieren und in Senderichtung auszugeben.

Die erste und zweite Signalbündelungs- und -spaltungseinheit können sowohl als Multiplexer (MUX) als auch als Demultiplexer (DEMUX) betrieben werden. Während des Multiplexer-Betriebs können die jeweiligen Signale somit gebündelt werden, wohingegen während des Demultiplexer-Betriebs das jeweilige empfangene Signal in die entsprechenden Einzelsignale aufgeteilt werden kann. Die erste und zweite Signalbündelungs- und -spaltungseinheit werden somit insbesondere als Transceiver eingesetzt. Die Bündelungs- und Spaltungsfunktion der ersten und zweiten Signalbündelungs- und -spaltungseinheit entsprechen einander, d.h. basieren insbesondere auf den gleichen vorgegebenen Regeln bzw. Vorschriften. Beispielsweise erfolgt die Spaltung eines jeweiligen gebündelten Signals auf Basis der vorgegebenen Wellenlängenbänder der einzelnen optischen Signale. Hierfür können die erste und zweite Signalbündelungs- und -spaltungseinheit dispersive Elemente zur Trennung der optischen Einzelsignale umfassen, z.B. Prismen, Beugungsgitter oder vorzugsweise AWGs (Arrays Waveguide Gratings). Zusätzlich oder alternativ können Wellenlängenfilter eingesetzt werden.

Gemäß einer Ausführungsform sind die erste und zweite Signalbündelungs- und -spaltungseinheit ausgebildet, empfangene optische Signale unter Verwendung des DWDM-Verfahrens (Dense Wavelength Division Multiplexing) zu bündeln und aufzuteilen. Es können somit mehrere optische Signale mit unterschiedlichen Wellenlängen bzw. Wellenlängenbändern über ein einzelnes gebündeltes optisches Signal übertragen werden. Gemäß dem DWDM-Verfahren ist eine hohe Kanaldichte von mehr als 40 oder 80 parallelen Kanälen möglich. Der Abstand zwischen benachbarten Wellenlängenbändern beträgt insbesondere weniger als 2 nm oder weniger als 1nm, vorzugsweise 0,8 nm oder 0,4 nm (jeweils der Wellenlänge). Durch den geringen Wellenlängenbandabstand können eine Vielzahl von Datenströmen gleichzeitig übertragen werden, was die Gesamtkapazität des Systems erhöht. Vorteilhafterweise können außerdem neue Übertragungskanäle bei Bedarf hinzugefügt werden, ohne bestehende Verbindungen zu unterbrechen oder aufwendige Hardwareanpassungen vornehmen zu müssen.

Gemäß einer Ausführungsform umfassen die statische Lichterzeugungs- und -erfassungseinheit und die bewegliche Lichtsende- und -empfangseinheit ein jeweiliges Lichtleiterarray zum Führen der Vielzahl von optischen Sendesignalen und Empfangssignalen. Das jeweilige Lichtleiterarray kann beispielsweise ein Faser- oder Wellenleiterarray sein und beispielsweise als Teil eines PICs (Photonic Integrated Circuit) ausgebildet sein, wodurch eine besonders kompakte Anordnung entsteht. Auf den PIC können ferner auch weitere Komponenten der statischen Lichterzeugungs- und -erfassungseinheit bzw. der beweglichen Lichtsende- und - empfangseinheit angeordnet sein. Beispielsweise können auf einem jeweiligen PIC Lichtquellen, Signalbündelungs- und -spaltungseinheiten, Detektoren, Verstärker, Filter oder dergleichen angeordnet werden. Ein jeweiliges optisches Sendesignal bzw. Empfangssignal wird somit insbesondere nur entlang des Signalübertragungsabschnitts ohne einen Lichtleiter geführt. Die einzelnen Fasern des Faserarrays bzw. die einzelnen Wellenleiter des Wellenleiterarrays können an der Lichtsende- und -empfangseinheit ferner in eine entsprechende Sende- und Empfangsoptik eingekoppelt sein, um die jeweiligen Sendesignale in entsprechende Richtungen in den Messbereich zu entsenden. Die Sende- und Empfangsoptik kann insbesondere auch zur Strahlaufweitung der jeweiligen Sendesignale verwendet werden. Als Sende- und Empfangsoptik kann beispielsweise eine Kollimationsoptik verwendet werden.

Gemäß einer Ausführungsform umfasst die Distanzmessvorrichtung ferner eine Steuereinheit, die ausgebildet ist, die Ausgaberichtung der Sendesignale, die durch das Lichtleiterarray der Lichtsende- und -empfangseinheit geführt werden, zu steuern. Anders ausgedrückt, führt die Steuereinheit ein sogenanntes Beamsteering durch, mit dem die Richtung der Sendesignale eingestellt werden kann.

Hierdurch wird beispielsweise sichergestellt, dass die Sendesignale in unterschiedliche Richtungen in den Messbereich entsendet werden. Die Steuereinheit ist insbesondere ausgebildet, die Strahlrichtung entweder durch Anpassung der Phasen der Lichtstrahlen im Lichtleiterarray, d.h. optische Phasenarrays (OPAs), oder durch Steuerung eines Schaltmechanismus zur Umleitung der Lichtstrahlen über unterschiedliche Pfade anzupassen.

Gemäß einer Ausführungsform umfasst die Distanzmessvorrichtung passive Ablenkungskomponenten, welche ausgebildet sind, eine, insbesondere wellenlängenabhängige, Ablenkung der in dem Lichtleiterarray der Lichtsende- und Empfangseinheit geführten Sendesignale in unterschiedliche Richtungen passiv durchzuführen. Passiv bedeutet beispielsweise, dass keine Steuereinheit hierfür erforderlich ist. Die Ablenkung kann hingegen basierend auf der Wellenlänge des jeweiligen Sendesignals erfolgen. Die passive wellenlängenabhängige Ablenkung der optischen Signale kann dabei verschiedene Anforderungen an die Wellenlängenbänder erfüllen, um eine präzise Steuerung der optischen Signale zu gewährleisten. Beispielsweise kann die Chirp-Breite des Signals so gewählt sein, dass sie die Position des optischen Signals im Wesentlichen unverändert lässt.. Ferner kann das Detuning (die Abweichung der Wellenlänge) eingesetzt werden, um die Strahlen abzulenken, ohne dass dabei eine Kopplung zu benachbarten Wellenlängen in der Signalbündelungs- und spaltungseinheit erfolgt. Beispielsweise kann hierdurch sichergestellt werden, dass die Ablenkung der Strahlen nicht zu einer unerwünschten Interaktion oder Überlagerung mit anderen Kanälen führt. Um einen großen Wellenlängenbereich zwischen den Einzelstrahlen abzudecken, können ferner spezialisierte Lichtquellen verwendet werden, die in der Lage sind, Licht über einen breiten Spektralbereich stabil zu erzeugen. Dies stellt insbesondere sicher, dass die Ablenkung über verschiedene Wellenlängen hinweg konsistent und präzise funktioniert.

Gemäß einer Ausführungsform sind die Lichtleiter des Lichtleiterarrays monomodig. Während der Übertragung der einzelnen optischen Sende- bzw. Empfangssignale tritt somit keine Modendispersion auf, so dass Signalverzerrungen, Rauschen und Streuverluste reduziert werden können. Aufgrund fehlender Modendispersion kann außerdem die gesamte Bandbreite des Lichtleiters für die Signalübertragung genutzt werden.

Gemäß einer Ausführungsform ist die Distanzmessvorrichtung ausgebildet, das gebündelte Sendesignal und/oder das gebündelte Empfangssignal über einen multimodigen/multimodalen Lichtleiter in eine jeweilige Optik einzukoppeln, um das gebündelte Sendesignal und/oder das gebündelte Empfangssignal über den Signalübertragungsabschnitt zu übertragen. Insbesondere kann eine jeweilige Wellenlänge bzw. ein jeweiliges Wellenlängenband eines der Sendesignale und/oder Empfangssignale in eine jeweilige Mode eingekoppelt werden, um Interferenzen bei der Übertragung zu vermeiden. Es ist auch möglich, gleiche Wellenlängen bzw. Wellenlängenbänder für unterschiedliche Sendesignale zu verwenden, wobei die einzelnen Signale in diesem Fall nur anhand der unterschiedlichen Moden identifiziert werden. Durch die Nutzung unterschiedlicher Wellenlängen bzw. Wellenlängenbänder sowie unterschiedlicher Moden für die Übertragung kann die Übertragungskapazität erheblich gesteigert werden. Die jeweilige Optik ist insbesondere ausgebildet, das gebündelte Sende- bzw. Empfangssignal zu fokussieren und in eine vorgegebene Richtung zu lenken. Die Optik kann beispielsweise eine Kollimationsoptik sein, welche beispielsweise fasergekoppelte Kollimatoren umfasst. Alternativ kann die Optik auch durch 3D-gedruckte Linsen auf einem optischen Chip realisiert sein.

Gemäß einer Ausführungsform umfasst das gebündelte Sendesignal und/oder das gebündelte Empfangssignal rotationssymmetrische optische Moden. Da der Signalübertragungsabschnitt in der Regel entlang der Rotationsachse der Lichtsende- und -empfangseinheit verläuft, wird bei rotationssymmetrischen optischen Moden somit sichergestellt, dass die Kopplung der Mode auf Sender- und Empfangsseite fehlerfrei abläuft. Insbesondere wird sichergestellt, dass die jeweilige Signalbündelungseinheit und -spaltungseinheit, die ursprünglichen Einzelsignale aus dem gebündelten Signal korrekt rekonstruieren kann. Das gebündelte optische Signal kann beispielsweise ringförmige Moden umfassen.

Gemäß einer Ausführungsform umfasst die bewegliche Lichtsende- und -empfangseinheit, insbesondere nur, passive Bauteile. Passive Bauteile sind beispielsweise dadurch gekennzeichnet, dass sie keine Stromversorgung benötigen. Beispielsweise umfasst die Lichtsende- und -empfangseinheit für die Führung der optischen Signale nur ein Faserarray oder ein PIC, insbesondere ohne Beam Steering, wobei in einem solchen Fall die extrahierten Sendesignale über jeweilige Lichtleiterkanäle auf eine entsprechende Anzahl von Ausgängen, sogenannte PIC-Exits, geführt werden, über welche die Sendesignale in den Messbereich entsandt werden. Vorteilhafterweise kann die thermische Last und die Anzahl von Bauteilen in der Lichtsende- und -empfangseinheit in dieser Ausführungsform auf ein Minimum reduziert werden.

Ein weiterer Aspekt der Erfindung betrifft ein Verfahren zur Messung einer Distanz, welches umfasst, dass:
von einer statischen Lichterzeugungs- und -erfassungseinheit zumindest ein optisches Signal als Sendesignal erzeugt und zumindest ein optisches Signal als Empfangssignal erfasst wird; und
von einer beweglichen Lichtsende- und -empfangseinheit das Sendesignal in einen Messbereich entsendet und ein von Objekten in dem Messbereich zurückgestrahltes optisches Signal als Empfangssignal empfangen wird, wobei in einem Signalübertragungsabschnitt zwischen der statischen Lichterzeugungs- und -erfassungseinheit und der beweglichen Lichtsende- und -empfangseinheit das Sendesignal und/oder Empfangssignal zumindest teilweise über eine Freiraum-Übertragung übertragen wird.

Für das Verfahren gelten die Ausführungen der erfindungsgemäßen Distanzmessvorrichtung entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnung dargestellt. Es zeigen:
- Fig. 1: eine schematische Darstellung einer Distanzmessvorrichtung; und
- Fig. 2: eine detaillierte Darstellung der einzelnen Komponenten der Distanzmessvorrichtung.

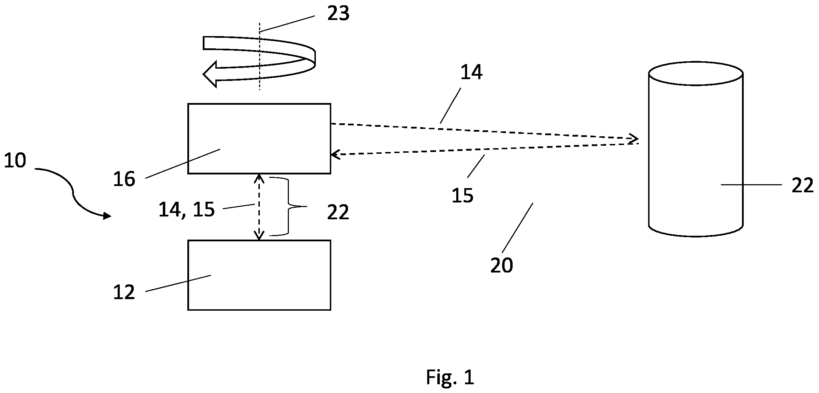

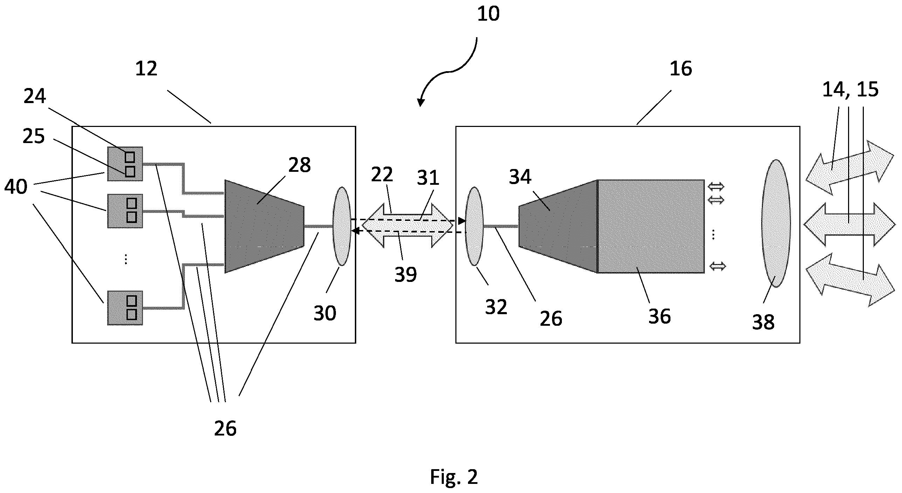

Fig. 1 zeigt eine Distanzmessvorrichtung 10, die eine statische Lichterzeugungs- und -erfassungseinheit 12 umfasst, welche ausgebildet ist, zumindest ein optisches Signal als Sendesignal 14 zu erzeugen und zumindest ein optisches Signal als Empfangssignal 15 zu erfassen. Ferner umfasst die Distanzmessvorrichtung 10 eine rotierende Lichtsende- und -empfangseinheit 16, welche ausgebildet ist, das Sendesignal 14 in einen Messbereich 18 zu entsenden und ein von Objekten 20 in dem Messbereich zurückgestrahltes optisches Signal als Empfangssignal 15 zu empfangen. Die Distanzmessvorrichtung 10 ist außerdem ausgebildet, in einem Signalübertragungsabschnitt 22 zwischen der statischen Lichterzeugungs- und - erfassungseinheit 12 und der beweglichen Lichtsende- und -empfangseinheit 16 das Sendesignal 14 und/oder Empfangssignal 15, insbesondere nur, über eine Freiraumübertragung zu übertragen. Über den Freiraum-Signalübertragungsabschnitt können die optischen Signale somit bidirektional übertragen werden. Beispielsweise kann das Sendesignal 14 in Senderichtung oder das Empfangssignal 15 in Empfangsrichtung über den Signalübertragungsabschnitt 22 übertragen werden. Die statische Lichterzeugungs- und -erfassungseinheit 12 ist als stationärer Teil der Distanzmessvorrichtung 10 ausgebildet, d.h. die Lichterzeugungs- und -erfassungseinheit 12 ist unbeweglich an einer festen Position der Distanzmessvorrichtung 10 befestigt. Wie in Fig. 1 angedeutet, ist die Lichtsende- und -empfangseinheit 16 hingegen als rotierender Teil der Distanzmessvorrichtung 10 ausgebildet und in der Lage, sich um 360° um die Rotationsachse 23 zu drehen. Dabei ist die Lichtsende- und -empfangseinheit 16 insbesondere an der statischen Lichterzeugungs- und -erfassungseinheit 12 beweglich befestigt. Wie in Fig. 1 ersichtlich, verläuft die Übertragung der optischen Signale, d.h. des Sendesignals und/oder Empfangssignals, über den Signalübertragungsabschnitt 22 im Wesentlichen entlang der Rotationsachse 23 der Lichtsende- und -empfangseinheit 16, um die Signalverluste bei der Übertragung zu minimieren. Die in Fig. 1 dargestellte Distanzmessvorrichtung 10 kann auch als mehrlagige Distanzmessvorrichtung 10 ausgebildet sein, wie in Fig. 2 veranschaulicht. Wobei in diesem Fall die Lichterzeugungs- und -erfassungseinheit 12 eine Vielzahl von optischen Sendesignalen, insbesondere gleichzeitig, erzeugt, so dass ein größerer Bereich der Umgebung abgetastet werden kann.

Fig. 2 veranschaulicht die einzelnen Komponenten einer mehrlagigen FMCW-Distanzmessvorrichtung 10. Die Lichterzeugungs- und -erfassungseinheit 12 umfasst N Lichtquellen 24, beispielsweise N Laser, welche jeweilige optische Sendesignale 14 erzeugen, sowie N Detektoren 25 zur Erfassung der Empfangssignale, wobei eine jeweilige Lichtquelle 24 zusammen mit einem zugehörigen Detektor 25 als Teil eines von N Messmodulen 40 ausgebildet ist. Die Sendesignale 14 sind dabei frequenzmodulierte optische Signale, deren Frequenzmodulation innerhalb eines jeweiligen Wellenlängenbandes erfolgt. Vorzugsweise unterscheiden sich die Wellenlängenbänder der jeweiligen Sendesignale 14 zumindest teilweise. Die Sendesignale 14 werden über jeweilige Lichtleiter 16, beispielsweise jeweilige optische Fasern oder Wellenleiter, an einen Multiplexer 28 geleitet, der die Lichtleiter 26 vereint und die Sendesignale 14 bündelt. Die einzelnen optischen Sendesignale 14 werden beispielsweise mittels des DWDM-Verfahrens gebündelt und über einen einzigen Lichtleiter 26 in eine erste Kollimationsoptik 30 eingekoppelt. Die erste Kollimationsoptik 30 sorgt dafür, dass das gebündelte optische Sendesignal 31 in eine vorgegebene Richtung abgestrahlt wird, so dass das gebündelte Sendesignal 31 von einer zweiten Kollimationsoptik 32 auf der Seite der Lichtsende- und -empfangseinheit 16 empfangen wird. Über die zweite Kollimationsoptik 32 wird das gebündelte Sendesignal 31 in einen Lichtleiter 26 eingekoppelt und zu einem Demultiplexer 34 geführt, welcher das gebündelte Sendesignal 31 basierend auf den bekannten Wellenlängenbändern der jeweiligen Sendesignale 14 in die einzelnen Sendesignale 14 spaltet und die einzelnen Sendesignale 14 in jeweilige Lichtleiter 26 einkoppelt. Die Lichtleiter 26 sind als Teil eines PICs 36 ausgebildet, welcher mittels Beam Steering die einzelnen Sendesignale 14 auf eine Sende- und Empfangsoptik 38, z.B. eine Kollimationsoptik, leitet, über die die Sendesignale 14 in den Messbereich 18 abgestrahlt werden. Die von Objekten 20 in dem Messbereich 18 zurückgestrahlten optischen Signale werden anschließend als Empfangssignale 15 von der Sende- und Empfangsoptik 38 empfangen und über den PIC 36 in jeweilige Lichtleiter 26 eingekoppelt und dem Demultiplexer 34 zugeführt. Der Demultiplexer 34 wird in Empfangsrichtung wiederum als Multiplexer betrieben, so dass die jeweiligen Empfangssignale 15 dem DWDM-Verfahren entsprechend gebündelt werden und über einen optischen Lichtleiter 26 in die zweite Kollimationsoptik 32 eingekoppelt werden. Die zweite Kollimationsoptik 32 ist ausgebildet, das gebündelte Empfangssignal 39 über den Signalübertragungsabschnitt 22 zwischen der Lichterzeugungs- und -erfassungseinheit 12 und der Lichtsende- und -empfangseinheit 16 über den freien Raum zu übertragen. Die erste Kollimationsoptik 30 empfängt das gebündelte Empfangssignal 39 und koppelt dieses in einen Lichtleiter 26 ein, der mit dem Multiplexer 28 verbunden ist. Der Multiplexer 28 agiert in Empfangsrichtung als Demultiplexer und spaltet das gebündelte Empfangssignal basierend auf den vorbekannten Wellenlängenbändern der jeweiligen Sendesignale in die einzelnen Empfangssignale, wobei die einzelnen Empfangssignale über die zugehörigen Lichtleiter 26 einem jeweiligen Detektor 25 zugeführt werden, der ein jeweiliges Empfangssignal in ein jeweiliges elektrisches Signal umwandelt. Die durch die Empfangssignale 15 erzeugten elektrischen Signale der einzelnen Detektoren 25 werden anschließend einer nicht gezeigten gemeinsamen Signalverarbeitungseinheit zugeführt, welche die elektrischen Signale weiterverarbeitet und basierend auf den erzeugten elektrischen Signalen jeweilige Distanzmesswerte ermittelt.

### Bezugszeichenliste

- 10: Distanzmessvorrichtung
- 12: Lichterzeugungs- und -erfassungseinheit
- 14: Sendesignal
- 15: Empfangssignal
- 16: Lichtsende- und -empfangseinheit
- 18: Messbereich
- 20: Objekte
- 22: Signalübertragungsabschnitt
- 23: Rotationsachse
- 24: Lichtquellen
- 25: Detektoren
- 26: Lichtleiter
- 28: Multiplexer
- 30: erste Kollimationsoptik
- 31: gebündeltes Sendesignal
- 32: zweite Kollimationsoptik
- 34: Demultiplexer
- 36: PIC
- 38: Sende- und Empfangsoptik
- 39: gebündeltes Empfangssignal
- 40: Messmodul

## Patentansprüche

1. Distanzmessvorrichtung (10), insbesondere FMCW-Distanzmessvorrichtung, umfassend:
eine statische Lichterzeugungs- und -erfassungseinheit (12), welche ausgebildet ist, zumindest ein optisches Signal als Sendesignal (14) zu erzeugen und zumindest ein optisches Signal als Empfangssignal (15) zu erfassen;
und
eine bewegliche Lichtsende- und -empfangseinheit (16), welche ausgebildet ist, das Sendesignal (14) in einen Messbereich (18) zu entsenden und ein von Objekten in dem Messbereich (18) zurückgestrahltes optisches Signal als Empfangssignal (15) zu empfangen;
wobei die Distanzmessvorrichtung (10) ausgebildet ist,
in einem Signalübertragungsabschnitt (22) zwischen der statischen Lichterzeugungs- und -erfassungseinheit (12) und der beweglichen Lichtsende- und -empfangseinheit (16) das Sendesignal (14) und/oder Empfangssignal (15) zumindest teilweise über eine Freiraum-Übertragung zu übertragen.

2. Distanzmessvorrichtung (10) nach Anspruch 1,
wobei die statische Lichterzeugungs- und -erfassungseinheit (12) ausgebildet ist, eine Vielzahl von Sendesignalen (14), insbesondere gleichzeitig, zu erzeugen und eine Vielzahl von Empfangssignalen (15) zu erfassen.

3. Distanzmessvorrichtung (10) nach Anspruch 2,
wobei die Distanzmessvorrichtung (10) ausgebildet ist, die Sendesignale (14) und/oder die Empfangssignale (15) vor einer Übertragung über den Signalübertragungsabschnitt (22) zu bündeln und, insbesondere nur, das gebündelte Sendesignal (31) und/oder das gebündelte Empfangssignal (39) über den Signalübertragungsabschnitt (22) zu übertragen.

4. Distanzmessvorrichtung (10) nach einem der vorstehenden Ansprüche, wobei der Signalübertragungsabschnitt (22) eine Abschirmeinheit umfasst, welche ausgebildet ist, die über den Signalübertragungsabschnitt (22) übertragenen optischen Signale von optischen Störsignalen abzuschirmen.

5. Distanzmessvorrichtung (10) nach einem der vorstehenden Ansprüche, wobei das zumindest eine Sendesignal (14) oder die Sendesignale (14) frequenzmoduliert sind, insbesondere wobei sich die optischen Signale in ihrer jeweiligen Wellenlänge oder in dem jeweiligen Wellenlängenband, in welchem die Frequenzmodulation erfolgt, im Wesentlichen unterscheiden.

6. Distanzmessvorrichtung (10) nach einem der Ansprüche 2 bis 5, wobei die statische Lichterzeugungs- und -erfassungseinheit (12) eine erste Signalbündelungs- und -spaltungseinheit umfasst und die bewegliche Lichtsende- und -empfangseinheit (16) eine zweite Signalbündelungs- und - spaltungseinheit umfasst,
wobei die erste Signalbündelungs- und -spaltungseinheit ausgebildet ist, die optischen Sendesignale (14) zu bündeln und das gebündelte optische Sendesignal (31) in Senderichtung auszugeben und ein über den Signalübertragungsabschnitt (22) übertragenes gebündeltes optisches Empfangssignal (39) zu empfangen und eine Vielzahl von optischen Empfangssignalen (15) aus dem gebündelten optischen Empfangssignal (39) zu extrahieren und in Empfangsrichtung auszugeben,
wobei die zweite Signalbündelungs- und -spaltungseinheit ausgebildet ist, die Vielzahl von optischen Empfangssignalen (15) zu bündeln und das gebündelte optische Empfangssignal (39) in Empfangsrichtung auszugeben und ein über den Signalübertragungsabschnitt (22) übertragenes gebündeltes optisches Sendesignal (31) zu empfangen und die Vielzahl von optischen Sendesignalen (14) aus dem gebündelten optischen Sendesignal (31) zu extrahieren und in Senderichtung auszugeben.

7. Distanzmessvorrichtung (10) nach Anspruch 6,
wobei die erste und zweite Signalbündelungseinheit und -spaltungseinheit ausgebildet sind, die Signale unter Verwendung des Dense-WDM-Verfahrens zu bündeln.

8. Distanzmessvorrichtung (10) nach einem der Ansprüche 2 bis 7,
wobei die statische Lichterzeugungs- und -erfassungseinheit (12) und die bewegliche Lichtsende- und -empfangseinheit (16) ein jeweiliges Lichtleiterarray zum Führen der Vielzahl von optischen Sendesignalen (14) und Empfangssignalen (15) umfassen.

9. Distanzmessvorrichtung (10) nach Anspruch 8,
die Distanzmessvorrichtung (10) ferner eine Steuereinheit umfasst, die ausgebildet ist, die Ausgaberichtung der Sendesignale (14), die durch das Lichtleiterarray der Lichtsende- und -empfangseinheit (16) geführt werden, zu steuern.

10. Distanzmessvorrichtung (10) nach Anspruch 8,
umfasst die Distanzmessvorrichtung (10) passive Ablenkungskomponenten, welche ausgebildet sind, eine, insbesondere wellenlängenabhängige, Ablenkung der in dem Lichtleiterarray der Lichtsende- und empfangseinheit (16) geführten Sendesignale (14) in unterschiedliche Richtungen passiv durchzuführen.

11. Distanzmessvorrichtung (10) nach einem der Ansprüche 8 bis 10, wobei die Lichtleiter (26) des Lichtleiterarrays monomodig sind.

12. Distanzmessvorrichtung (10) nach einem der Ansprüche 3 bis 11,
wobei die Distanzmessvorrichtung (10) ausgebildet ist, das gebündelte Sendesignal (31) und/oder das gebündelte Empfangssignal (39) über einen multimodigen Lichtleiter in eine jeweilige Optik einzukoppeln, um das gebündelte Sendesignal (31) und/oder das gebündelte Empfangssignal (39) über den Signalübertragungsabschnitt (22) zu übertragen.

13. Distanzmessvorrichtung (10) nach Anspruch 12,
wobei das gebündelte Sendesignal (31) und/oder das gebündelte Empfangssignal (39) rotationssymmetrische optische Moden umfasst.

14. Distanzmessvorrichtung (10) nach einem der vorstehenden Ansprüche,
wobei die bewegliche Lichtsende und -empfangseinheit (16), insbesondere nur, passive Bauteile umfasst.

15. Verfahren zur Messung einer Distanz, welches umfasst, dass:
von einer statischen Lichterzeugungs- und -erfassungseinheit (12) zumindest ein optisches Signal als Sendesignal (14) erzeugt und zumindest ein optisches Signal als Empfangssignal (15) erfasst wird; und
von einer beweglichen Lichtsende- und -empfangseinheit (16) das Sendesignal (14) in einen Messbereich (18) entsendet und ein von Objekten in dem Messbereich (18) zurückgestrahltes optisches Signal als Empfangssignal (15) empfangen wird;
wobei in einem Signalübertragungsabschnitt (22) zwischen der statischen Lichterzeugungs- und -erfassungseinheit (12) und der beweglichen Lichtsende- und -empfangseinheit (16) das Sendesignal (14) und/oder Empfangssignal (15) zumindest teilweise über eine Freiraum-Übertragung übertragen wird.
